# EUROPÄISCHE PATENTSCHRIFT

(11) **EP 1 913 288 B1**
(45) Veröffentlichungstag und Bekanntmachung des Hinweises auf die Patenterteilung: **28.08.2013**
(21) Anmeldenummer: 06762549.1
(22) Anmeldetag: 12.07.2006
(51) Int. Cl.: F16H 41/24

(54) **ANTRIEBSSTRANG FÜR FAHRZEUGE**
DRIVE TRAIN FOR VEHICLES
TRANSMISSION DE VEHICULES AUTOMOBILES

(30) Priorität: 08.08.2005 DE 102005037379; 21.10.2005 DE 102005050506
(43) Veröffentlichungstag der Anmeldung: 23.04.2008
(73) Patentinhaber: Bayerische Motoren Werke Aktiengesellschaft, 80809 München (DE)
(72) Erfinder: PÜSCHEL, Eckard, 85417 Marzling (DE); BERGER, Michael, 81549 München (DE); VORWERK, Jens, 81927 München (DE)
(86) Internationale Anmeldenummer: PCT/EP2006/006807
(87) Internationale Veröffentlichungsnummer: WO 2007/017034

(56) Entgegenhaltungen:
- EP-A- 1 191 256
- EP-A- 1 347 210
- DE-A1- 3 827 249
- DE-C1- 3 222 119
- US-A- 2 588 668

## Beschreibung

Die vorliegende Erfindung betrifft einen Antriebsstrang für Fahrzeuge gemäß dem Oberbegriff des Patentanspruches 1.

Ein derartiger Antriebsstrang ist aus der EP1 347 210 B1 bekannt. Zum technischen Hintergrund der vorliegenden Erfindung zählen ferner die DE 32 22 119 C1 sowie die DE 38 27 249 A1.

Bei der eingangs erwähnten EP 1347 210 B1 ist das abtriebsseitige Ende der Kurbelwelle über eine Mitnehmerscheibe mit einem Antriebsflansch eines Drehmomentwandlers verschraubt. Die Mitnehmerscheibe ist ein rotationssymmetrisches Blechpressteil. Sie ist aus einem tiefziehbaren Stahlblech hergestellt. Der radiale Rand der Mitnehmerscheibe ist ähnlich wie der Rand einer Schüssel umgebogen. Die Verbindungsschrauben, mittels derer der Wandler mit der Mitnehmerscheibe verschraubt ist, sind schräg in Bezug auf die Kurbelwellenachse angeordnet, was die Montage bzw. Demontage erleichtert.

Im Betrieb kommt es im Antriebsstrang zu axialen "Verschiebungen". Axiale Verschiebungen resultieren zum einen aus Wärmedehnungen der Kurbelwelle. Zum anderen ergeben sich Verschiebungen aus dem Drehmomentwandler. Beim Übergang vom Leerlaufbetrieb in den Lastbetrieb baut sich im Wandler ein Betriebsöldruck auf, durch den der Antriebsflansch des Drehmomentwandlers in Richtung des Verbrennungsmotors gedrückt wird.

Aufgabe der Erfindung ist es, einen Antriebsstrang für Fahrzeuge zu schaffen, der eine hohe Montage- und Demontagefreundlichkeit aufweist und bei dem die im Betrieb auftretenden axialen Verschiebungen in konstruktiv einfacher Weise kompensiert werden.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Antriebsstrang für Fahrzeuge, mit einem Verbrennungsmotor, an den ein Flansch eines Getriebegehäuses angeflanscht ist. Eine Kurbelwelle des Verbrennungsmotors ist über ein in einer Axialrichtung elastisches, tellerfederartiges Zwischenelement mit einem Antriebsflansch eines Drehmomentwandlers verbunden, der im Bereich des Getriebeeingangs bzw. des Flanschs des Getriebes angeordnet ist. Der Antriebsflansch des Drehmomentwandlers ist über mehrere über einen Umfang des Zwischenelements verteilt angeordnete Verbindungsschrauben mit dem Zwischenelement verschraubt. Um eine einfache Montage- und Demontage zu ermöglichen ist der Antriebsflansch des Drehmomentwandlers von der Seite des Getriebegehäuses her mit dem Zwischenelement verschraubt und zwar derart, dass die Verbindungsschrauben vom Getriebe aus in Richtung des Verbrennungsmotors gesehen, unter einem Winkel schräg nach innen in das Zwischenelement eingeschraubt sind.

Der Kern der Erfindung besteht darin, dass das zur Drehmomentübertragung von der Kurbelwelle auf den Antriebsflansch des Drehmomentwandlers vorgesehene Zwischenelement ein aus einem Federstahlblech hergestelltes tellerfederartig elastisches Zentralteil mit mehreren radial nach außen abstehenden Federarmen aufweist. Das Zentralteil kann im Wesentlichen eben sein. Die freien Enden der Federarme sind mittelbar mit dem Antriebsflansch des Drehmomentwandlers verbunden. Das aus Federstahl hergestellte Zentralteil des Zwischenelements verleiht dem Antriebsstrang die axiale Elastizität, die zur Kompensation der im Betrieb auftretenden axialen Verschiebungen erforderlich ist.

Zur Verbindung des Zwischenelements mit dem Antriebsflansch des Drehmomentwandlers ist ein Flanschring vorgesehen, welcher mit den freien Enden der Federarme verbunden ist. Die freien Enden der Federarme können mit dem Flanschring vernietet oder in anderer Weise verbunden sein. Über den Umfang des Flanschrings verteilt sind "Flanschelemente" angeordnet, in welche die Verbindungsschrauben eingeschraubt sind. Die Flanschelemente können Ausformungen des Flanschrings und somit integraler Bestandteil des Flanschrings sein.

Alternativ zu einem Flanschring kann an den freien Enden der Federarme auch jeweils ein separates Flanschelement angeordnet sein. Die Flanschelemente können mit den Federarmen vernietet sein. Die Flanschelemente sind so ausgebildet, dass die darin vorgesehenen Gewindebohrungen, in welche die Verbindungsschrauben eingeschraubt werden, entsprechend schräg nach innen weisen.

Der Flanschring bzw. alternativ dazu die Flanschelemente sind vorzugsweise nicht wie das Zentralteil aus einem Federstahl hergestellt, sondern aus einem Stahl, der gut umformbar bzw. tiefziehbar ist.

Zur Montage bzw. Demontage der Verbindungsschrauben kann in dem Getriebegehäuse eine Montageöffnung vorgesehen sein. Über die Montageöffnung ist bei entsprechender Drehstellung des Zwischenelements und des Drehmomentwandlers eine oder mehrere der Verbindungsschrauben von der Außenseite des Getriebegehäuses her zugänglich. Durch Weiterdrehen des Motors bzw. des mit der Kurbelwelle des Motors verbundenen Zwischenelements sind nacheinander auch die übrigen Verbindungsschrauben schräg von außen her zugänglich.

Im folgenden wird die Erfindung im Zusammenhang mit der Zeichnung näher erläutert.

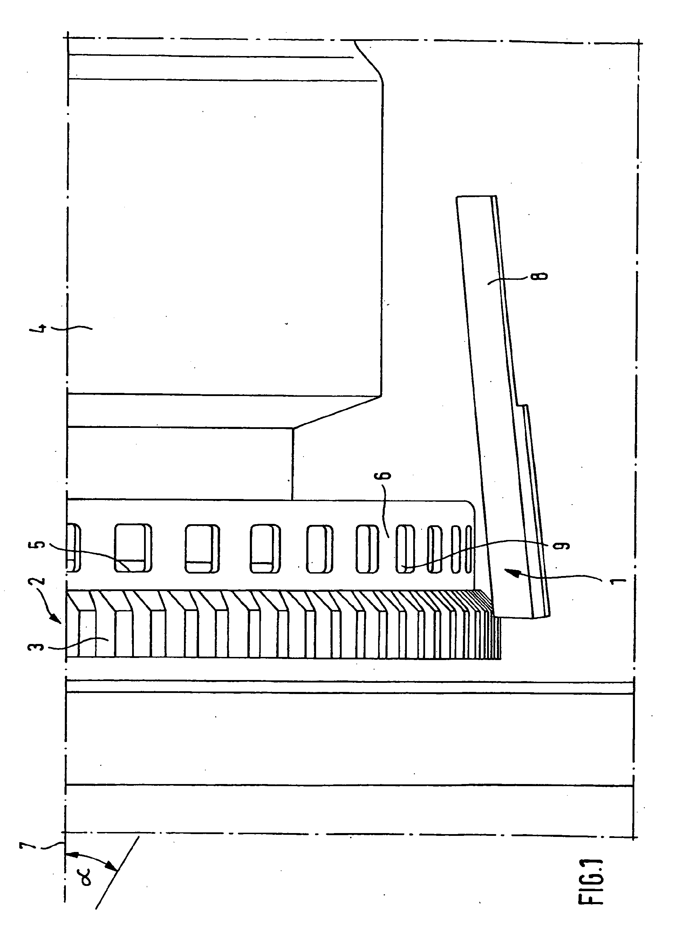

Figur 1 zeigt in schematischer Darstellung das Grundprinzip der Erfindung. An einen hier nicht näher dargestellten Verbrennungsmotor ist ein Getriebegehäuse angeflanscht, von dem hier lediglich ein Wandstück 1 dargestellt ist. Eine hier nicht näher dargestellte Kurbelwelle des Verbrennungsmotors ist mit einem "Zwischenelement" 2 verbunden. An der Außenseite des Zwischenelements 2 ist ein Starterzahnkranz 3 vorgesehen, in den das Starterritzel eines hier nicht näher dargestellten Anlassers einspurbar ist.

In dem Getriebegehäuse 1 ist ein Drehmomentwandler 4 vorgesehen, der einen Antriebsflansch 5 aufweist, welcher mit dem Zwischenelement 2 verschraubt ist. Der Antriebsflansch 5 ist über mehrere in Umfangsrichtung des Zwischenelements 2 verteilt angeordnete Verbindungsschrauben mit dem Zwischenelement 2 verschraubt.

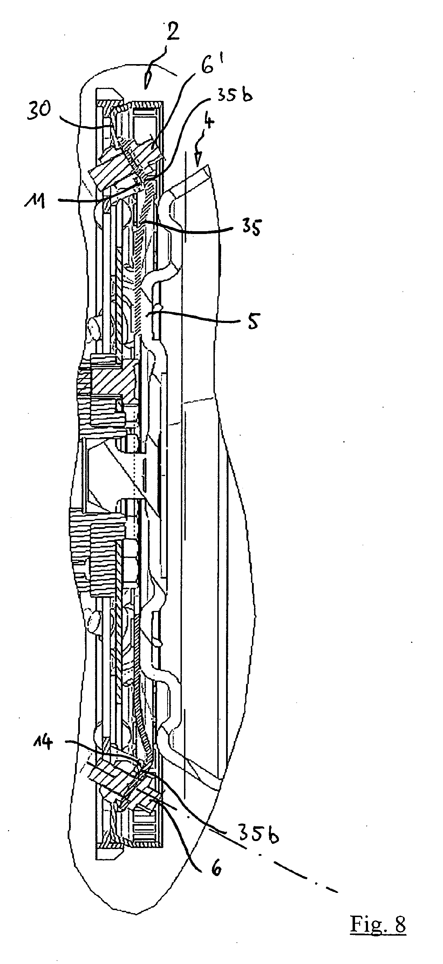

Es sei ausdrücklich darauf hingewiesen, dass der Antriebsflansch 5 nicht notwendigerweise unmittelbar mit dem Zwischenelement 2 verschraubt sein muss, was im Zusammenhang mit Figur 8 noch näher erläutert wird.

Von den Verbindungsschrauben ist in Figur 1 lediglich eine Verbindungsschraube 6 dargestellt. Wie aus Figur 1 ersichtlich ist, ist die Verbindungsschraube 6 schräg in Bezug auf eine Axialrichtung 7 angeordnet. Vom Getriebe aus in Richtung Verbrennungsmotor gesehen ist die Verbindungsschraube 6 unter einem Winkel α schräg nach innen in das Zwischenelement 2 eingeschraubt. Der Winkel α kann beispielsweise 30° sein.

Zur Montage bzw. Demontage der Verbindungsschrauben 6 ist im Getriebegehäuse 1 eine Montageöffnung 8 vorgesehen. Über die Montageöffnung 8 kann die Schraube 6 mittels eines entsprechenden Montagewerkzeugs, z. B. einer Nuss, schräg nach innen eingeführt und in das Zwischenelement 2 eingeschraubt werden.

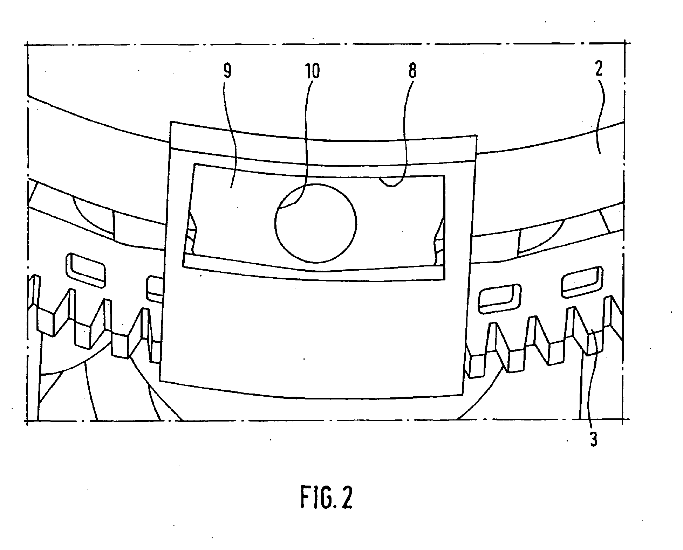

Figur 2 zeigt die Montageöffnung 8 vor dem Einschrauben der Verbindungsschraube 6. Wie aus Figur 2 ersichtlich ist, ist am Außenumfang des Zwischenelements 2 ein schräg angeordnetes Flanschelement 9 vorgesehen. Das Flanschelement 9 weist eine Gewindebohrung 10 auf, in welche die Verbindungsschraube 6 (vgl. Figur 1) eingeschraubt werden kann.

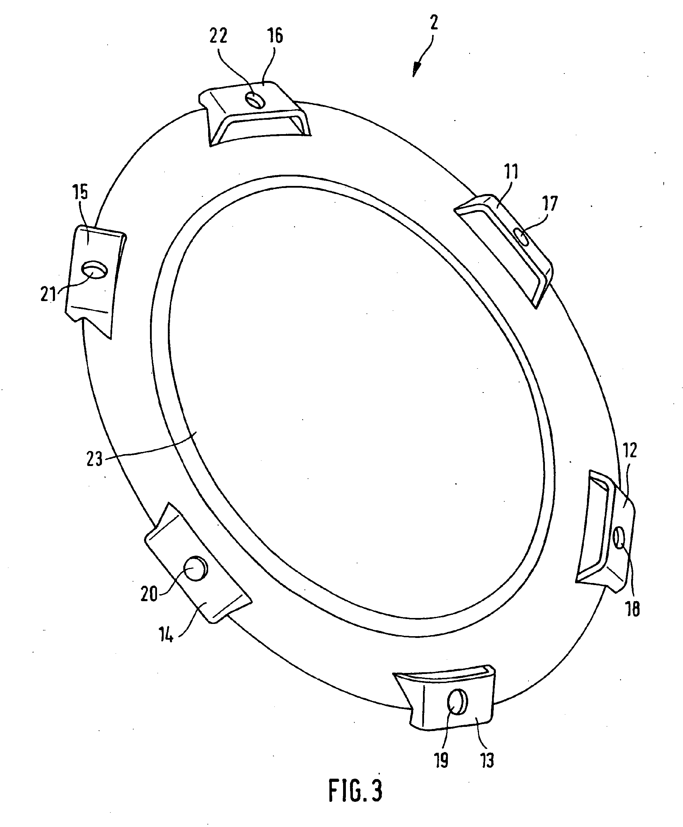

Figur 3 (nicht Gegenstand der vorliegenden Erfindung) zeigt ein tellerfederartiges Zwischenelement 2, an dessen Außenumfang verteilt mehrere Flanschelemente 11 - 16 angeordnet sind. Jedes der Flanschelemente 9 - 16 weist jeweils eine Gewindebohrung 17 - 22 auf. Die Flanschelemente 11 - 16 sind hier integraler Bestandteil des tellerfederartigen Zwischenelements 2. Alternativ dazu können die Flanschelemente 11 - 16 auch aus einem anderen Material hergestellt sein als das "Zentralteil" 23 des tellerfederartigen Zwischenelements 2. Die Flanschelemente 11 - 16 können beispielsweise an das Zentralteil 23 angenietet sein.

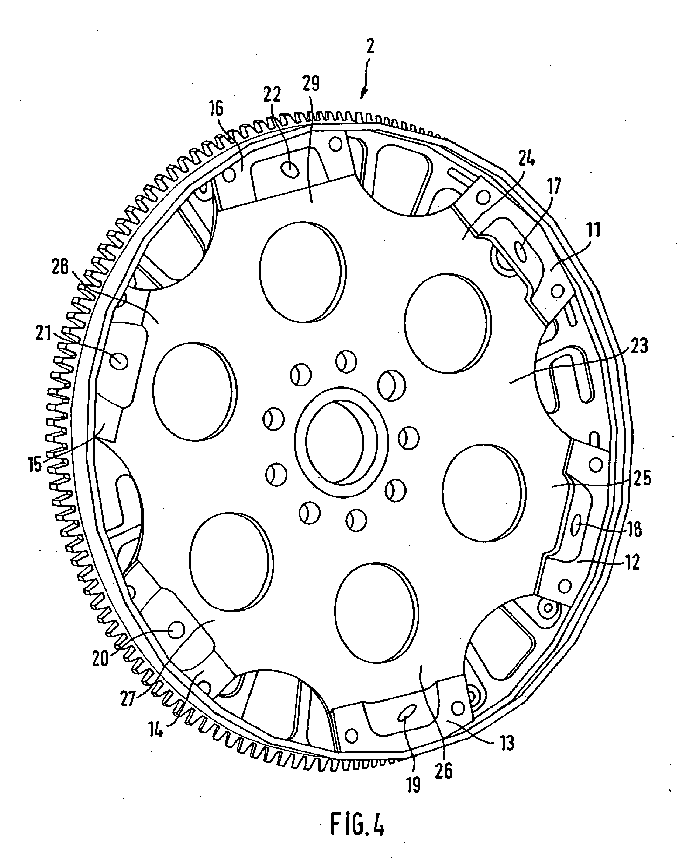

Figur 4 (nicht Gegenstand der vorliegenden Erfindung) zeigt ein modifiziertes tellerfederartiges Zwischenelement 2. Das Zwischenelement 2 weist ein Zentralteil 23 auf, das aus einem Federstahlblech hergestellt ist. Das Zentralteil 23 weist ferner Federarme 24 - 29 auf, die radial nach außen abstehen. An freien Enden der Federarme sind jeweils ein Flanschelement 11 - 16 angeordnet. Die Flanschelemente 11 - 16 können mit dem Zentralteil, oder genauer gesagt mit den Armen 24 - 29 des Zentralteils 23, vernietet sein. Wie aus Figur 4 ersichtlich ist, weisen die Flanschelemente 11 - 16 jeweils eine Gewindebohrung 17 - 22 auf. Die Gewindebohrungen sind jeweils in einer Ausbuchtung der Flanschelemente 11 - 16 vorgesehen. Die Längsachsen der Gewindebohrungen 17 - 22 verlaufen, wie im Zusammenhang mit Figur 1 erläutert wurde, schräg nach innen, z. B. unter einem Winkel von 30° zur Drehachse des Zwischenelements 2.

Da beim Beispiel der Figur 4 die Flanschelemente 11 - 16 aus einem anderen Material als das Zentralteil 23 hergestellt ist, werden die Funktion "Elastizität in Axialrichtung" und die Funktion "Verbindung mit dem Antriebsflansch des Drehmomentwandlers" von unterschiedlichen Bauteilen mit jeweils unterschiedlichen Materialeigenschaften übernommen. Während das Zentralteil vorzugsweise aus einem Federstahlblech hergestellt ist, können die Flanschelemente 11 - 16 aus einem tiefziehbaren Stahlblech hergestellt sein.

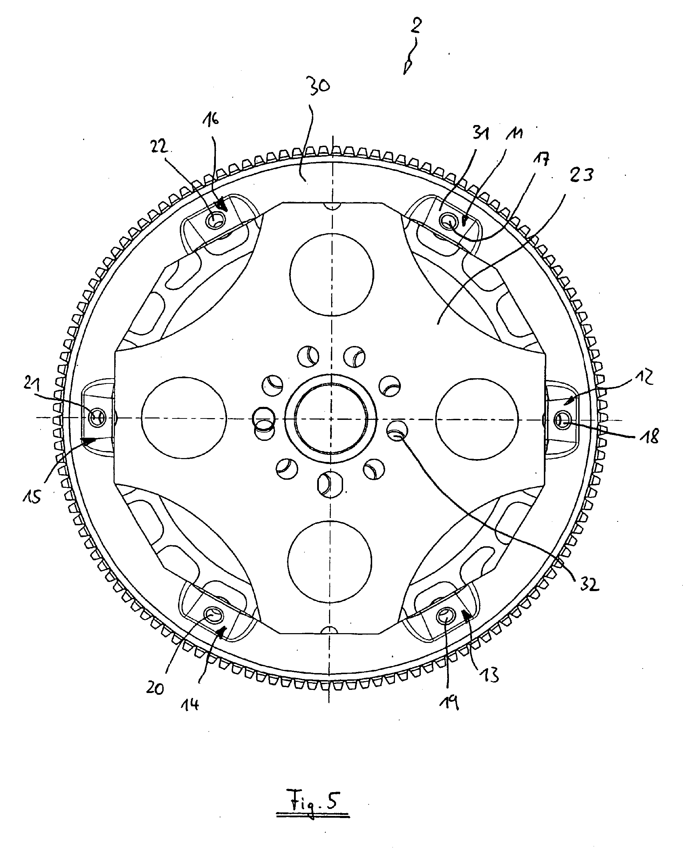

Figur 5 zeigt ein weiteres Ausführungsbeispiel eines Antriebsstrangs gemäß der Erfindung. Das Zwischenelement 2 weist ein vierarmiges Zentralteil 23 auf. Die freien Enden des Zentralteils 23, das ebenfalls aus einem Federstahl hergestellt sein kann, sind mit einem Flanschring 30 verbunden. Der Flanschring 30 und das Zentralteil 23 können beispielsweise miteinander vernietet sein. Der Flanschring 30 kann aus einem tiefziehbaren Stahlblech hergestellt sein. In Umfangsrichtung des Flanschring 30 sind mehrere Flanschelemente 11 - 16 angeordnet. Die Flanschelemente 11 - 16 sind durch Ausformungen im Flanschring gebildet, die beispielsweise durch Tiefziehen hergestellt werden können. Jede der Ausformungen weist eine in Bezug auf eine Drehachse des Zwischenelements 2 schräg stehende Fläche 31 auf. In diesen schrägen Flächen ist jeweils eine Gewindebohrung 17 - 22 vorgesehen, in welche die Verbindungsschrauben eingeschraubt werden.

Zur Verbindung des Zwischenelements 2 mit der Kurbelwelle sind im Mittelbereich des Zwischenelements 2 in Umfangsrichtung verteilt mehrere Bohrungen 32 vorgesehen, mittels derer die Kurbelwelle an das Zwischenelement 2 angeflanscht werden kann.

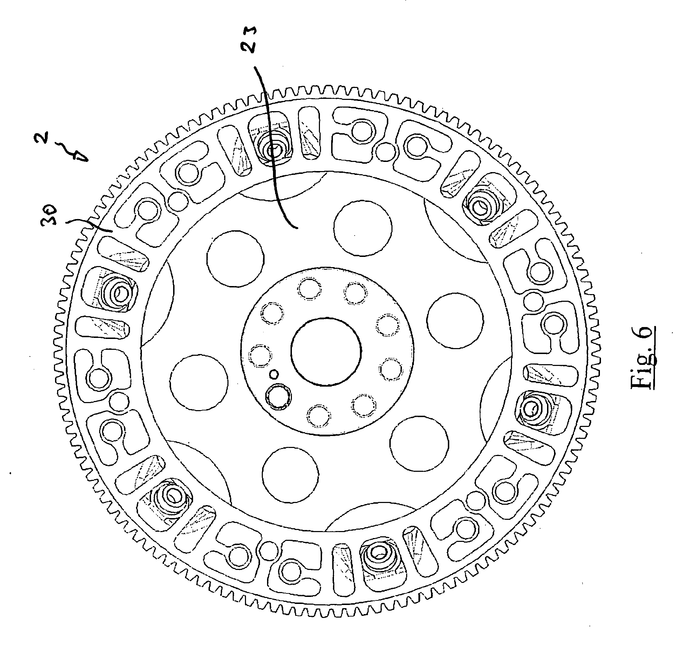

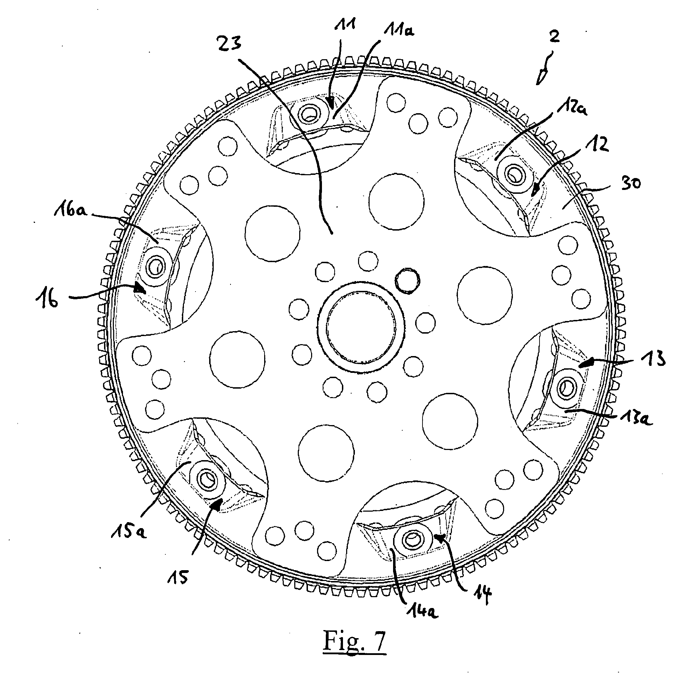

Figur 6 zeigt ein weiteres Ausführungsbeispiel gemäß der Erfindung von der Seite des Motors bzw. von der Seite der Kurbelwelle ausgesehen. Figur 7 zweit seine Rückansicht, d.h. vom Getriebe aus gesehen. Figur 8 zeigt eine seitliche Schnittansicht.

Das Zwischenelement 2 der Figuren 6 - 8 weist ein Zentralteil 23 mit sechs in Umfangsrichtung gleichmäßig voneinander beabstandeten Federarmen auf. Von der Seite des Getriebes aus gesehen (vgl. Figur 7), ist das Zentralteil 23 mit seinen Federarmen auf den Flanschring 30 aufgesetzt. Die Enden der Federarme sind mit dem Flanschring 30 vernietet, ähnlich wie dies bei Ausführungsbeispiel der Figur 4 gezeigt ist. Wie in Figur 7 angedeutet ist, weisen die Flanschelemente 11 - 16 konvexe Flanschflächen 11a - 16a auf. Die Flanschflächen 11a - 16a sind bei dem hier gezeigten Ausführungsbeispiel sphärisch gestaltet. Dies bedeutet, dass die Flanschflächen 11a - 16a der sechs Flanschelemente 11 - 16 alle auf einer gedachten Kugel liegen.

Figur 8 zeigt einen seitlichen Schnitt durch das Zwischenelement 2 der Figuren 6, 7. Aus Figur 8 ist ersichtlich, dass der Antriebsflansch 5 des Drehmomentwandlers 4 nicht unmittelbar mit dem Zwischenelement 2 verschraubt ist, sondern über ein ringartiges Zwischenblech 35. Ein radial innerer Abschnitt 35a des Zwischenblechs 35 ist mit dem Antriebsflansch 5 des Drehmomentwandlers 4 verbunden. Der Antriebsflansch 5 kann mit dem Zwischenblech 35 vernietet, verschraubt, verschweißt oder in sonstiger Weise verbunden sein. Ein radial äußerer Abschnitt 35b des Zwischenblechs ist sphärisch gebogen und liegt an den Flanschflächen 11a - 16a der sechs Flanschelemente an, von denen in Figur 8 lediglich die Flanschelemente 11 und 14 zu sehen sind. An den Flanschelementen 11 - 16 ist das Zwischenblech 35 mit dem Flanschring 30 verschraubt, wobei die Schrauben 6, 6', wie bereits im Zusammenhang mit Figur 1 erläutert wurde, von der Seite des Drehmomentwandlers 4 aus gesehen "schräg nach innen eingeschraubt" sind.

Alternativ zu dem Zwischenblech 35 könnten an den Antriebsflansch 5 auf Winkelelemente o.ä. abgeschweißt, angeschraubt oder angenietet sein, welche an den Flanschflächen 11 a - 16a anliegen und mit dem Flanschring 30 verschfaubt sind.

## Patentansprüche

1. Antriebsstrang für Fahrzeuge, mit
einem Verbrennungsmotor, an den ein Flansch eines Getriebegehäuses (1) angeflanscht ist, wobei eine Kurbelwelle des Verbrennungsmotors über ein Zwischenelement (2) mit einem Antriebsflansch (5) eines im Bereich des Flanschs angeordneten Drehmomentwandlers (4) des Getriebes verbunden ist, und der Antriebsflansch (5) des Drehmomentwandlers (4) über mehrere über einen Umfang des Zwischenelements (2) verteilt angeordneter Verbindungsschrauben (6) mit dem Zwischenelement (2) verbunden ist, wobei vom Getriebe aus in Richtung Verbrennungsmotor gesehen die Verbindungsschrauben (6) unter einem Winkel (α) schräg nach innen in das Zwischenelement (2) eingeschraubt sind,
**dadurch gekennzeichnet, dass**
• das Zwischenelement (2) ein aus einem Federstahl hergestelltes tellerfederartig elastisches Zentralteil (23) mit mehreren radial abstehenden Federarmen (24 - 29) aufweist,
• freie Enden der Federarme mit einem Flanschring (30) verbunden sind, wobei über den Umfang des Flanschrings (30) verteilt mehrere Flanschelemente (11 -16) angeordnet sind, in welche die Verbindungsschrauben (6) eingeschraubt sind, und dass
• von der Seite des Getriebegehäuses (1) aus gesehen, die Federarme des Zentralteils (23) auf dem Flanschring (30) aufliegen.

2. Antriebsstrang nach Anspruch 1, **dadurch gekennzeichnet, dass** die Flanschelemente (11 - 16) Ausformungen des Flanschrings (30) und somit integraler Bestandteil des Flanschrings (30) sind.

3. Antriebsstrang nach Anspruch 1 oder 2, **dadurch gekennzeichnet, dass** am freien Ende eines jeden der Federarme (24 - 29) jeweils ein Flanschelement (11 - 16) angeordnet ist, in welche jeweils mindestens eine der Verbindungsschrauben (6) eingeschraubt ist.

4. Antriebsstrang nach Anspruch 3, **dadurch gekennzeichnet, dass** die Flanschelemente (11-16) aus einem tiefziehbaren Stahlblech hergestellt sind.

5. Antriebsstrang nach einem der Ansprüche 1 bis 4, **dadurch gekennzeichnet, dass** in dem Getriebegehäuse (1) eine Montageöffnung (8) vorgesehen ist, über die bei entsprechender Drehstellung des Zwischenelements (2) und des Drehmomentwandlers (4) mindestens eine der Verbindungsschrauben (6) von der Außenseite des Getriebegehäuses (1) her zugänglich ist und durch Weiterdrehen des Zwischenelements (2) und des Drehmomentwandlers (4) nacheinander auch die übrigen Verbindungsschrauben (6) zugänglich sind.

6. Antriebsstrang nach einem der vorangehenden Ansprüche, **dadurch gekennzeichnet, dass** die Flanschelemente (11 - 16) sphärisch gewölbte Flanschflächen (11a -16a) aufweisen, an denen unmittelbar der Antriebsflansch (5) des Drehmomentwandlers (4) oder ein mit dem Antriebsflansch des Drehmomentwandlers verbundenes Bauteil (35) anliegt.

## Claims

1. A drive train for motor vehicles, comprising an internal combustion engine on which a flange of a gearbox (1) is mounted, wherein a crankshaft of the internal combustion engine is connected by an intermediate element (2) to a driving flange (5) of a gear torque converter (4) disposed in the neighbourhood of the flange, and the driving flange (5) of the gear torque converter (4) is connected to the intermediate element (2) by a number of connecting screws (6) distributed round a periphery of the intermediate element (2), wherein the connecting screws (6), considered from the gearbox towards the engine, are screwed at an angle (α) into the intermediate element (2), **characterised in that**
• the intermediate element (2) is a resilient spring cup-like central part (23) made of spring steel and with a number of radially projecting arms (24-29),
• free ends of the spring arms are connected to a flanged ring (30), wherein a number of flanged elements (11-16) are disposed round the periphery of the flanged ring (30) and the connecting screws (6) are screwed into them, and
• as seen from the side of the gearbox (1), the spring arms of the central part (23) rest on the flanged ring (30).

2. A drive train according to claim 1, **characterised in that** the flanged elements (11-16) are formed on the flanged ring (30) and are consequently an integral part thereof.

3. A drive train according to claim 1 or claim 2, **characterised in that** a flanged element (11-16) into which at least one respective connecting screw (6) is screwed is disposed on the free end of each spring arm (24-29).

4. A drive train according to claim 3, **characterised in that** the flanged elements (11-16) are made of deep-drawn sheet steel.

5. A drive train according to any of claims 1 to 4, **characterised in that** the gearbox (1) has an assembly opening (8) via which, when the intermediate element (2) and the torque converter (4) are in the right rotary position, at least one connecting screw (6) is accessible from the outside of the gearbox (1), and the other connecting screws (6) are successively accessible by additionally turning the intermediate element (2) and the torque converter (4).

6. A drive train according to any of the preceding claims, **characterised in that** the flanged elements (11-16) have spherical surfaces (11a - 16a) immediately adjacent the driving flange (5) of the torque converter (4) or a component (35) connected to the driving flange of the torque converter.

## Revendications

1. Transmission de véhicule automobile comportant :
un moteur à combustion interne sur lequel est bridée une bride d'un carter de boite de vitesse (1), le vilebrequin du moteur à combustion interne étant relié par un élément intermédiaire (2) avec une bride d'entrainement (5) d'un transformateur de couple (4) de la boite de vitesses montée dans la zone de la bride, et la bride d'entrainement (5) du transformateur de couple (4) étant reliée à l'élément intermédiaire (2) par plusieurs vis de liaison (6) réparties sur la périphérie de l'élément intermédiaire (2), à partir de la boite de vitesses et en direction du moteur à combustion interne, les vis de liaison (6) étant vissées obliquement vers l'intérieur dans l'élément intermédiaire (2) sous un angle (α),
**caractérisée en ce que**
l'élément intermédiaire (2) comporte une partie centrale élastique (23) en forme de ressort à disques réalisée en acier à ressorts et munie de plusieurs bras élastiques (24, 29) s'écartant radialement,
les extrémités libres des bras élastiques sont reliées par un anneau de bride (30), plusieurs éléments de bride (11, 16) dans lesquels les vis de liaison (6) sont vissées étant répartis sur la périphérie de l'anneau de bride (30), et
à partir du côté du carter de boite de vitesses (1), les bras élastiques de la partie centrale (23) s'appliquent sur l'anneau de bride (30).

2. Transmission conforme à la revendication 1,
**caractérisée en ce que**
les éléments de bride (11, 16) sont des déformations de l'anneau de bride (30) et font ainsi partie intégrante de cet anneau de bride (30).

3. Transmission conforme à la revendication 1 ou 2,
**caractérisée en ce que**
sur les extrémités libres de chacun des bras élastiques (24, 29) est respectivement monté un élément de bride (11, 16) dans lequel est respectivement vissée au moins l'une des vis de liaison (6).

4. Transmission conforme à la revendication 3,
**caractérisée en ce que**
les éléments de bride (11, 16) sont réalisés à partir d'une tôle en acier pouvant être emboutie.

5. Transmission conforme à l'une des revendications 1 à 4,
**caractérisée en ce que**
dans le carter de boite de vitesses (1) est prévue une ouverture de montage (8) par laquelle, dans une position de rotation correspondante de l'élément intermédiaire (2) et du convertisseur du couple de rotation (4) au moins l'une des vis de liaison (6) est accessible à partir de la face externe du carter de boite de vitesses (1), et, suite à la poursuite de la rotation de l'élément intermédiaire (2) et du convertisseur de couple (4), les autres vis de liaison (6) sont également accessibles les unes après les autres.

6. Transmission conforme à l'une des revendications précédentes,
**caractérisée en ce que**
les éléments de bride (11, 16) comportent des surfaces de bride (11a, 16a) cintrées sphériquement sur lesquelles s'appuie directement la bride d'entrainement (5) du convertisseur de couple (4) ou un élément (35) relié à la bride d'entrainement du convertisseur de couple.
